# EUROPÄISCHE PATENTSCHRIFT

(11) **EP 1 521 669 B1**
(45) Veröffentlichungstag und Bekanntmachung des Hinweises auf die Patenterteilung: **25.01.2006**
(21) Anmeldenummer: 03732485.2
(22) Anmeldetag: 27.05.2003
(51) Int. Cl.: B29C 51/36, B29C 51/16, B29C 33/42, B29C 59/02

(54) **LUFTDURCHLÄSSIGES FORMWERKZEUG SOWIE VERFAHREN ZUR HERSTELLUNG GENARBTER BAUTEILE DURCH AUFKASCHIEREN EINER FOLIE AUF EIN TRÄGERTEIL**
AIR-PERMEABLE MOULDING TOOL AND METHOD FOR PRODUCTION OF EMBOSSED COMPONENTS BY CLADDING A FILM ON A SUPPORT PIECE
OUTIL DE FACONNAGE PERMEABLE A L'AIR ET PROCEDE DE PRODUCTION D'ELEMENTS CONSTITUTIFS GRAINES, PAR CONTRECOLLAGE D'UNE PELLICULE SUR UNE PARTIE SUPPORT

(30) Priorität: 04.07.2002 DE 10230109
(43) Veröffentlichungstag der Anmeldung: 13.04.2005
(73) Patentinhaber: Frimo-Huber Systemtechnik GmbH & Co.KG, 83395 Freilassing (DE)
(72) Erfinder: RAUSCH, Franz, A-5151 Nussdorf (AT)
(74) Vertreter: Moldenhauer, Herbert
(86) Internationale Anmeldenummer: PCT/EP2003/005584
(87) Internationale Veröffentlichungsnummer: WO 2004/005010

(56) Entgegenhaltungen:
- WO-A-94/25249
- DE-A- 19 959 654
- US-A- 5 076 880
- US-A- 5 629 085
- US-B1- 6 171 419
- PATENT ABSTRACTS OF JAPAN vol. 2000, no. 03, 30. März 2000 (2000-03-30) & JP 11 333918 A (KONAN TOKUSHU SANGYO KK), 7. Dezember 1999 (1999-12-07)

## Beschreibung

Die Erfindung betrifft ein luftdurchlässiges Formwerkzeug zur Folienprägung im Negativ-Prägetiefziehverfahren zur Herstellung genarbter Bauteile, sowie ein Verfahren zur Herstellung dieser Bauteile.

Zur Folienprägung im Negativ-Prägetiefziehverfahren wird derzeit insbesondere ein mikroporöses Galvanowerkzeug verwendet. Kernstück dieses Werkzeugs ist eine Matrize mit einer mikroporösen Galvanoschale aus Nickel. Um ein solches Formwerkzeug zu erzeugen, muß für ein Galvanisierungsbad zunächst ein Badmodell angefertigt werden. Dieses Badmodell erhält man über Negativ-/Positiv-Abformungen von einem sogenannten Urmodell. Von diesem z.B. leder- oder folienbezogenen Schwundmaßmodell wird ein erstes Silikonnegativmodell hergestellt. In diesem Silikonnegativmodell wird dann das sogenannte Muttermodell hergestellt. Das Muttermodell ist Ausgangspunkt und Referenz für alle weiteren Arbeiten. Da es alle Fehler des Schwundmaßmodells enthält, muß es in einigen Bereichen korrigiert werden, insbesondere müssen Leder- oder Folienstöße nachgraviert werden. Dieses Muttermodell besteht üblicherweise aus Epoxidharz. Von diesem Muttermodell wird dann ein zweites Silikonnegativmodell hergestellt. In diesem werden dann alle Badmodelle aus glasfaserverstärktem Epoxidharz hergestellt. Dieses erhält für die Gewährleistung einer elektrischen Leitfähigkeit z.B. eine Spiegelversilberung auf der Oberfläche. Auf diese wird anschließend galvanisch eine mikroporöse Nickelschicht abgeschieden. Diese mikroporöse Schicht wird dann mit einem luftdurchlässigen sogenannten Hinterbau kombiniert und das vollständige Formwerkzeug der Tiefziehformvorrichtung gefertigt.

Mittels Vakuum wird beim Formen die erhitzte Folie gegen das temperierte Formwerkzeug gezogen, so daß sie die Narbung der mikroporösen Nickelschicht annimmt. Anschließend erfolgt die Raschierung der Folie mit einem Trägerteil, z.B. einem Innenverkleidungsteil eines Kraftfahrzeuges. Die Herstellung derartiger Formwerkzeuge ist sehr aufwendig und teuer. Darüber hinaus sind die Formwerkzeuge sehr stoß- und kratzempfindlich. Weiters ist ein Reinigen der mikroporösen verwundenen Vakuumlöcher sehr schwierig.

Die WO 94/25249 A beschreibt ein Verfahren zur Herstellung von Innenausstattungskomponenten für Kraftfahrzeugtüren, wobei ein Polsterlaminatträger in ein Vakuumformteil eingebracht wird, das die Oberfläche der Innentürbekleidung aufweist, wobei eine Vinylschicht erhitzt wird, diese erhitze Schicht durch Vakuum tiefgezogen wird, so dass die Vinylschicht mit der Innenfläche des Polsterlaminatträgers verklebt, und wobei ein weiteres formbares Material auf die Vinylschicht aufgetragen wird und ein bereits vorher gefertigtes Gegenstück mit Substratbeschichtung auf das Vakuumformteil mit der Vinylschicht aufgesetzt wird. Das eingesetzte Formwerkzeug ist kontoriert und massiv.

Die DE 199 59 654 A1 hat ein Verfahren zur Herstellung von Innenausstattungskomponenten von Kraftfahrzeugen mit einem definierten Oberflächenprofil zum Inhalt, wobei in einem ersten Schritt ein die sichtbare Oberfläche bildender Werkstoff in einem Formwerkzeug positioniert wird, dann durch Einwirkung von Druck und/oder Temperatur verformt und die gewünschte Oberflächenprägung erzeugt wird, und in einem weiteren Schritt ein Trägerwerkstoff auf der Basis von naturfaserverstärkten Polymerwerkstoffen in das Formwerkzeug verformt wird. Das Oberflächenprofil kann eine manuelle Narbung sein. Ein Vakuum kann an das Formwerkzeug durch poröse Ausgestaltung angelegt werden.

Die US 5,629,085 A hat ein Harzlaminat zum Inhalt, dessen irreguläre Strukturen auf der Oberfläche verringert sind. Zu diesem Zweck wird ein Formwerkzeug aus einem massiven Körper, der aus einem gesinterten Material, das aus einer Mischung aus Metallpulver und einem keramischen Material hergestellt wird, besteht, eingesetzt. Das gesinterte Material ist mikroporös, so dass Luft durch das Material gesaugt werden kann.

Die DE 298 10 862 U beschreibt ein Tiefziehwerkzeug für Kunststoffplatten oder -folien, das die die Negativformen bildenden Kavitäten der Werkzeugmatritzen schnell und kostengünstig herstellbar machen soll. Dazu wird die Matritze aus einer oder mehreren übereinanderliegenden Platten aus formstabilem Material, insbesondere Kunststoff, in welchen die Kavitäten in Form von ausgeschnittenen Durchbrüchen angeordnet sind, hergestellt.

Aufgabe der Erfindung ist es, ein Formwerkzeug für das Negativ-Prägetiefziehen von Folien zu schaffen, das einfach, schneller und kostengünstig herstellbar, unempfindlich und zudem leichter zu reinigen ist.

Die Aufgabe wird mit einem Formwerkzeug mit den Merkmalen des Anspruch 1 gelöst.

Vorteilhafte Weiterbildungen sind in den Unteransprüchen gekennzeichnet.

Das erfindungsgemäße Formwerkzeug ist aus Stahl ausgebildet und besitzt eine strukturierte bzw. genarbte folienseitige Oberfläche, welche durch Ätzung hergestellt ist. Um die Folie an das Formwerkzeug ansaugen zu können (tiefziehen), ist das Formwerkzeug mit einer Vielzahl von sehr feinen Bohrungen durchsetzt, die von der folienseitigen Oberfläche durch die Formwerkzeugwandung hindurch zur rückwärtigen Oberfläche durchgehen und in den Formwerkzeughinterbau münden.

Vorzugsweise weist das erfindungsgemäße Formwerkzeug eine Temperiereinrichtung und gegebenenfalls weitere Mittel auf, die eine sehr gleichmäßige Temperierung des gesamten Formwerkzeugs gewährleistet, so daß ein Verzug des Werkzeugs und/oder der Folie ausgeschlossen ist. Das Formwerkzeug hat insbesondere eine Schalenform, die einerseits die folienseitige Oberfläche mit Narbung und rückseitig eine Temperierungseinrichtung sowie gegebenenfalls Versteifungsrippen aufweist.

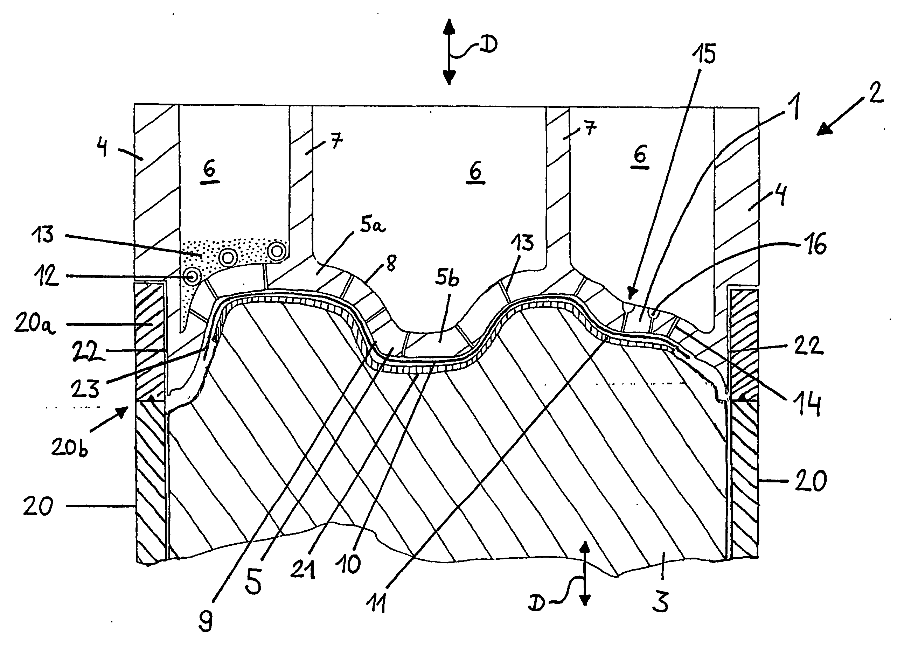

Die Erfindung wird anhand einer Zeichnung im folgenden beispielhaft näher erläutert, deren einzige Figur einen Querschnitt durch ein erfindungsgemäßes Tiefzieh-Formwerkzeug zeigt.

Das erfindungsgemäße Formwerkzeug 1 ist Teil z.B. einer Tiefzieh-Thermoformvorrichtung 2 aufweisend das Formwerkzeug 1 als Oberwerkzeug und ein Unterwerkzeug 3, die jeweils in Doppelpfeilrichtung "D" verfahrbar sind.

Das Formwerkzeug 1 ist aus Stahl, insbesondere aus Werkzeugstahl, z.B. mit der Endnummer .2311; .2738, und schalenförmig ausgebildet mit z.B. Formwerkzeugseitenwandungen 4 und einem Werkzeugschalenboden 5, der unregelmäßig oder regelmäßig konturiert ist. In der Figur ist beispielsweise eine wellige Kontur dargestellt mit Wellentälern 5a und Wellenkämmen 5b. Die Kontur entspricht der Kontur eines Trägerteils z.B. eines Innenauskleidungsteils 11 eines Kraftfahrzeuges. Die Werkzeugschale 5 hat z.B. eine Dicke von etwa 2 bis 10 mm. In dem durch die Formwerkzeugseitenwandungen 4 und den Schalenboden 5 begrenzten Raum 6 sind zweckmäßigerweise Versteifungsrippen 7 vorgesehen, welche sich von einer kastenseitigen Rückfläche 8 der Formwandung 5 weg erstrecken.

Der Rückfläche 8 der Formwandung 5 gegenüberliegend weist die Formwandung 5 eine Formungsfläche 9 auf, die mit einer Narbung (nicht erkennbar) ausgebildet ist. Die Narbung ist z.B. mittels Ätzung hergestellt. Die Narbung entspricht z.B. einer Ledernarbung oder technischen Narbung, z.B. Prismapositiv-Narbungen, Baseballnarbungen oder dergleichen, und ist derart gestaltet, daß sie auf eine zu kaschierende Folie übertragen werden kann.

Die Folie wird grundsätzlich unter Einfluß von Wärme auf das Trägerteil aufkaschiert. Insbesondere in diesem Zusammenhang ist vorgesehen, daß das Formwerkzeug 1 mit einer Temperiereinrichtung ausgerüstet ist. Dazu sind zweckmäßigerweise an der Rückseite 8 insbesondere gleichmäßig über dem Boden 5 verteilt, Beheizungseinrichtungen 12 vorgesehen. Diese Beheizungseinrichtungen 12 können beispielsweise Rohrleitungen sein, die ein Heizmedium führen.

Die Temperiereinrichtung kann auch lediglich dazu dienen, einen Verzug des Formwerkzeugs 1 aufgrund unterschiedlicher Temperaturen oder Wärmeabflußraten im Formwerkzeug zu vermeiden. Zudem können im Hohlraum 6 wärmespeichernde und/oder wärmedämmende Mittel, z.B. Granulate 13 ganz oder teilweise ausgefüllt sein. Insbesondere kann ein Aluminiumgranulat verwendet werden.

In die Formwandung 5 sind von der Fläche 9 zur Fläche 8 durchgehende Löcher 13 eingebracht. Die Löcher 13 haben z.B. einen Durchmesser von 0,1 bis 0,3 mm. Sie sind vorzugsweise mit einem Laser eingebracht. Um das Einbringen zu erleichtern, können die Löcher 13 zum Hohlraum 6 hin mit Einsenkungen 16 münden, die die Materialdicke in diesem Bereich zur Verringerung des Laserbohraufwandes reduzieren.

Das Unterwerkzeug 3 wird von einer an sich bekannten Spannrahmeneinrichtung umgeben, die einen Oberspannrahmen 20a und einen auf dem Oberspannrahmen sitzenden Unterspannrahmen 20a umfasst. Zwischen den Spannrahmen 20a, 20 wird die Folie 23 im Folienklemmniveau 20b eingeklemmt. Dafür sind die Spannrahmen 20a, 20 auseinander- und wieder zusammenfahrbar ausgebildet.

Das Unterwerkzeug 3 ist in der Spannrahmeneinrichtung in Doppelpfeilrichtung "D" und zweckmäßigerweise auch aus der Spannrahmeneinrichtung heraus verfahrbar. Die Spannrahmeneinrichtung ist zweckmäßigerweise separat, z.B. rechtwinklig zur Bewegungsrichtung gemäß Doppelpfeil "D" des Unterwerkzeugs 3 seitlich verfahrbar angeordnet, so daß eine Folie 23 außerhalb des Werkzeugs einspannbar ist und ggf. auch beheizt werden kann.

Zum Kaschieren werden z.B. die Werkzeugteile 1 und 3 auseinandergefahren, eine Kaschierfolie 23 zwischen den Ober- und Unterspannrahmen 20a, 20 geklemmt und die Folie außerhalb oder auch in der Formstation bzw. in der Werkzeugstation erhitzt.

Die erhitzte Folie 23 wird zuerst mittels eines über das Formwerkzeug 1 erzeugten Vakuums, zweckmäßigerweise auch durch von der Unterseite wirkende Druckluft unterstützt, in das Prägewerkzeug 1 (Matrize) eingesaugt und die Narbung auf die Folie übertragen, wobei die Folie vorher aus der Spannrahmeneinrichtung entlassen wird.

Erst im nächsten Schritt wird das Trägerteil 11 dem Unterwerkzeug 3 zugeführt und dann die geprägte Folie wiederum mittels Vakuum auf das Trägerteil gebracht. Zu diesem Zweck ist das Unterwerkzeug 3 in an sich bekannter Weise vakuumfähig ausgebildet (nicht dargestellt) und zweckmäßigerweise das Trägerteil 11 auch luftdurchlässig.

Die Folie 23 kann eine übliche Kaschierfolie sein, beispielsweise aus PVC, TPO oder dergleichen. Um Luft durch die Löcher 14 zu saugen, verfügt das obere Formwerkzeug 1 über eine entsprechende Einrichtung, wobei die Temperierungseinrichtung und ggf. die wärmedämmenden und/oder wärmespeichernden Granulate das Absaugen der Luft nicht behindern.

## Patentansprüche

1. Luftdurchlässiges Formwerkzeug zur narbenden Folienprägung im Negativ-Prägetiefziehverfahren zur Herstellung genarbter Bauteile durch Aufkaschieren einer Folie auf das Bauteil, wobei das Formwerkzeug (1) konturiert ist und eine schalenförmige Wandung (5) aufweist,
**dadurch gekennzeichnet, daß** das Formwerkzeug aus stahl ausgebildet ist, wobei in die bauteilseitige Oberfläche (9) der Schalenwandung (5) eine geätzte, sich im Tiefziehprozess vor der Kaschierung auf die Folie (23) übertragende Narbung eingebracht ist, und in die Schalenwandung (5) eine Mehrzahl von durch die Wandung durchgehenden Löchern (14) zum Durchsaugen von Luft und Ansaugen der Folie (23) eingebracht sind, wobei die Löcher gelasert oder erodiert sind.

2. Formwerkzeug nach Anspruch 1,
**dadurch gekennzeichnet,**
**daß** das Formwerkzeug (1) Formwerkzeugseitenwandungen (4) und eine unregelmäßig oder regelmäßig geformte Formgebungsbodenwandung (5) aufweist.

3. Formwerkzeug nach Anspruch 1 oder 2,
**dadurch gekennzeichnet,**
**daß** die Formwandung (5) eine Dicke zwischen 2 bis 10 mm aufweist.

4. Formwerkzeug nach einem der vorhergehenden Ansprüche,
**dadurch gekennzeichnet,**
**daß** in dem durch die Formwerkzeugseitenwandungen (4) und die Formwandung (5) begrenzten Raum (6) Versteifungsrippen (7) vorhanden sind, welche sich von einer kastenseitigen Rückfläche (8) der Formwandung (5) weg erstrecken.

5. Formwerkzeug nach einem der vorhergehenden Ansprüche,
**dadurch gekennzeichnet,**
**daß** das Formwerkzeug (1) aus einem Werkzeugstahl, insbesondere einem Werkzeugstahl für Spritz-Preßwerkzeuge ausgebildet ist.

6. Formwerkzeug nach einem der vorhergehenden Ansprüche,
**dadurch gekennzeichnet,**
**daß** die Formungsfläche (9) mit einer Oberflächenkontur ausgebildet ist, die einem zu kaschierenden Trägerteil (11) entspricht.

7. Formwerkzeug nach einem der vorhergehenden Ansprüche,
**dadurch gekennzeichnet,**
**daß** das Formwerkzeug (1) eine Temperiereinrichtung (12) aufweist.

8. Formwerkzeug nach Anspruch 7,
**dadurch gekennzeichnet,**
**daß** die Temperiervorrichtung (12) Temperiermedium führende Rohrleitungen und/oder Wärmestrahler und/oder elektrische Heizelemente aufweist.

9. Formwerkzeug nach einem der vorhergehenden Ansprüche,
**dadurch gekennzeichnet,**
**daß** der Hinterbauhohlraum (6) ein wärmespeicherndes und/oder wärmedämmendes Mittel, z.B. Granulate (13) aufweist.

10. Formwerkzeug nach Anspruch 9,
**dadurch gekennzeichnet,**
**daß** das Granulat ein Aluminiumgranulat und/oder Keramikgranulat ist.

11. Formwerkzeug nach einem der vorhergehenden Ansprüche,
**dadurch gekennzeichnet,**
**daß** die Löcher (14) einen.Durchmesser zwischen 0,1 und 0,3 mm aufweisen.

12. Formwerkzeug nach einem der vorhergehenden Ansprüche,
**dadurch gekennzeichnet,**
**daß** die Löcher (14) lasergebohrte Löcher sind.

13. Formwerkzeug nach einem der vorhergehenden Ansprüche,
**dadurch gekennzeichnet,**
**daß** die Löcher (14) erodiert sind.

14. Formwerkzeug nach einem der vorhergehenden Ansprüche,
**dadurch gekennzeichnet,**
**daß** die Lochmündungen (15) zum Hinterbau hin in Einsenkungen (16) münden.

15. Verfahren zur Herstellung genarbter Bauteile durch Aufkaschieren einer Folie auf ein Trägerteil unter Verwendung eines Formwerkzeugs nach einem oder mehreren der Ansprüche 1 bis 14,
**dadurch gekennzeichnet,**
**daß** zunächst die Folie erhitzt und mittels Vakuum an ein die Narbung tragendes Prägewerkzeug gesaugt wird, wobei die Narbung auf die Folie übertragen wird und anschließend die genarbte Folie dem Trägerteil zugeführt und auf das Trägerteil übergeben wird, wonach ein übliches Kaschieren durchgeführt wird.

16. Verfahren nach Anspruch 15,
**dadurch gekennzeichnet,**
**daß** die Folie zusätzlich durch Druckluft unterstützt gegen das Prägewerkzeug geführt wird.

17. Verfahren nach Anspruch 15 und/oder 16,
**dadurch gekennzeichnet,**
**daß** die Folie mittels Vakuum auf das Trägerteil übergeben wird.

18. Verfahren nach einem oder mehreren der Ansprüche 15 bis 17,
**dadurch gekennzeichnet,**
**daß** ein luftdurchlässiges Trägerteil verwendet wird.

## Claims

1. Air-permeable forming tool for graining film embossing by the negative embossing thermoforming method for the production of grained components by laminating the component with a film,
the forming tool (1) being contoured and having a wall (5) in the form of a shell,
**characterised in that** the forming tool is made of steel,
an etched graining, which is transferred to the film (23) in the thermoforming process before the lamination, being provided in the component-side surface (9) of the shell wall (5),
and
a plurality of holes (14), which pass through the wall and serve for sucking air through and sucking the film (23) on, being provided in the shell wall (5),
the holes being produced by laser or erosion.

2. Forming tool according to Claim 1,
**characterised in that** the forming tool (1) has forming-tool side walls (4) and an irregularly or regularly shaped forming bottom wall (5).

3. Forming tool according to Claim 1 or 2,
**characterised in that** the forming wall (5) has a thickness between 2 and 10 mm.

4. Forming tool according to one of the preceding claims,
**characterised in that** stiffening ribs (7) are present in the space (6) bounded by the forming-tool side walls (4) and the forming wall (5), which stiffening ribs extend away from a box-side rear surface (8) of the forming wall (5).

5. Forming tool according to one of the preceding claims,
**characterised in that** the forming tool (1) is made of a tool steel, in particular a tool steel for transfer moulds.

6. Forming tool according to one of the preceding claims,
**characterised in that** the forming surface (9) is formed with a surface contour which corresponds to a carrier part (11) to be laminated.

7. Forming tool according to one of the preceding claims,
**characterised in that** the forming tool (1) has a thermal-conditioning device (12).

8. Forming tool according to Claim 7,
**characterised in that** the thermal-conditioning device (12) has conduits which convey thermal-conditioning medium, and/or heat radiators and/or electrical heating elements.

9. Forming tool according to one of the preceding claims,
**characterised in that** the rear-structure hollow space (6) has a heat-storing and/or heat-insulating means, e.g. granulates (13).

10. Forming tool according to Claim 9,
**characterised in that** the granulate is an aluminium granulate and/or ceramic granulate.

11. Forming tool according to one of the preceding claims,
**characterised in that** the holes (14) have a diameter between 0.1 and 0.3 mm.

12. Forming tool according to one of the preceding claims,
**characterised in that** the holes (14) are laser-drilled holes.

13. Forming tool according to one of the preceding claims,
**characterised in that** the holes (14) are eroded.

14. Forming tool according to one of the preceding claims,
**characterised in that** the hole mouths (15) open out, towards the rear structure, into indentations (16).

15. Method for producing grained components by laminating a carrier part with a film using a forming tool according to one or more of Claims 1 to 14,
**characterised in that** the film is firstly heated and sucked by means of a vacuum onto an embossing tool bearing the graining, during which the graining is transferred to the film, and subsequently the grained film is fed to the carrier part and transferred to the carrier part, whereupon customary lamination is carried out.

16. Method according to Claim 15,
**characterised in that** the film is additionally brought against the embossing tool with the assistance of compressed air.

17. Method according to Claim 15 and/or 16,
**characterised in that** the film is transferred to the carrier part by means of a vacuum.

18. Method according to one or more of Claims 15 to 17,
**characterised in that** an air-permeable carrier part is used.

## Revendications

1. Outil de formage perméable à l'air pour la frappe de feuille à grainage dans un procédé d'emboutissage profond à frappe négatif aux fins de la fabrication de composants grainés par contrecollage d'une feuille sur le composant, où l'outil de formage (1) définit un contour et présente une paroi en forme de cuvette (5), **caractérisé en ce que** l'outil de formage est constitué d'acier, où un grainage corrodé se transférant sur la feuille (23) dans le procédé d'emboutissage profond préalablement au contrecollage est pratiqué dans la surface (9) du côté du composant de la paroi en cuvette (5), et une pluralité de trous (14) traversant la paroi sont pratiqués dans là paroi en cuvette (5) pour le passage d'air et l'aspiration de la feuille (23), les trous étant réalisés au laser ou par érosion.

2. Outil de formage selon la revendication 1, **caractérisé en ce que** l'outil de formage (1) présente des parois latérales d'outil de formage (4) et une paroi de fond de façonnage formée de façon régulière ou irrégulière (5).

3. Outil de formage selon l'une quelconque des revendications 1 ou 2, **caractérisé en ce que** la paroi de formage (5) présente une épaisseur comprise entre 2 et 10 mm.

4. Outil de formage selon l'une quelconque des revendications précédentes, **caractérisé en ce que** dans l'espace (6) délimité par les parois latérales (4) de l'outil de formage et la paroi de formage (5), se trouvent des nervures de renforcement (7) qui s'étendent en opposition à une face arrière (8) du côté du caisson de la paroi de formage (5).

5. Outil de formage selon l'une quelconque des revendications précédentes, **caractérisé en ce que** l'outil de formage (1) est constitué d'un acier à outils, en particulier d'un acier à outils pour outils de filage.

6. Outil de formage selon l'une quelconque des revendications précédentes, **caractérisé en ce que** la surface de formage (9) est constituée avec un contour de surface qui correspond à une partie de support à contrecoller (11).

7. Outil de formage selon l'une quelconque des revendications précédentes, **caractérisé en ce que** l'outil de formage (1) présente un dispositif de mise en température (12).

8. Outil de formage selon la revendication 7, **caractérisé en ce que** le dispositif de mise en température (12) présente des conduites de circulation pour une substance de mise en température et/ou des radiateurs thermiques et/ou des éléments de chauffage électriques.

9. Outil de formage selon l'une quelconque des revendications précédentes, **caractérisé en ce que** l'espace creux arrière (6) présente un moyen d'accumulation thermique et/ou d'isolation thermique, par exemple un granulat (13).

10. Outil de formage selon la revendication 9, **caractérisé en ce que** le granulat est un granulat d'aluminium et/ou un granulat de céramique.

11. Outil de formage selon l'une quelconque des revendications précédentes, **caractérisé en ce que** les trous (14) présentent un diamètre compris entre 0,1 et 0,3 mm.

12. Outil de formage selon l'une quelconque des revendications précédentes, **caractérisé en ce que** les trous (14) sont des trous percés au laser.

13. Outil de formage selon l'une quelconque des revendications précédentes, **caractérisé en ce que** les trous (14) sont érodés.

14. Outil de formage selon l'une quelconque des revendications précédentes, **caractérisé en ce que** les embouchures (15) des trous débouchent dans des cavités (16) en direction de l'arrière.

15. Procédé de fabrication de composants grainés par contrecollage d'une feuille sur une partie de support en utilisant un outil de formage selon l'une quelconque ou plusieurs des revendications 1 à 14, **caractérisé en ce que** la feuille est en premier lieu chauffée et aspirée au moyen de vide sur un outil de frappe portant le grainage, le grainage étant transféré sur la feuille, puis la feuille grainée est amenée à la partie de support et appliquée sur la partie de support, après quoi un contrecollage ordinaire est exécuté.

16. Procédé selon la revendication 15, **caractérisé en ce que** la feuille est en outre amenée contre l'outil de frappe en étant soutenue au moyen d'air comprimé.

17. Procédé selon l'une quelconque des revendications 15 et/ou 16, **caractérisé en ce que** la feuille est appliquée sur la partie de support au moyen de vide.

18. Procédé selon l'une quelconque ou plusieurs des revendications 15 à 17, **caractérisé en ce qu'**une partie de support perméable à l'air est utilisée.
